# EUROPEAN PATENT APPLICATION

(11) **EP 1 180 858 A1**
(43) Date of publication of application: **20.02.2002**
(21) Application number: 01915772.6
(22) Date of filing: 26.03.2001
(51) Int. Cl.: H04B 7/26, H04B 1/04, H04J 11/00, H04J 13/00

(54) **RADIO COMMUNICATION APPARATUS AND TRANSMISSION POWER CONTROL METHOD**

(30) Priority: 31.03.2000 JP 2000098516
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0102401
(87) International publication number: WO0176104

(57) **Abstract**

Channel quality candidate generators 171-1 through 171-16 virtually increase (U) or decrease (D) the transmission power of channels A through D using mutually different patterns, and predict overall channel quality after combining each channel signal in that case. Subtracters 172-1 through 172-16 find the difference between the channel quality predicted by corresponding channel quality candidate generator 171-1 through 171-16 and a target quality, and output a difference value. A selector 173 selects the difference value with the smallest absolute value from among the difference values output from subtracters 172-1 through 172-16, and generates a TPC command to each of channels A through D based on the transmission power of channels A through D virtually increased or decreased by corresponding channel quality candidate generator 171-1 through 171-16. By this means, it is possible for a desired quality to be obtained for overall communications while reducing total transmission power on the transmitting side.

## Description

### Technical Field

The present invention relates to a transmitting apparatus, receiving apparatus, and transmission power control method for use in radio communications that use a plurality of channels, such as a multicarrier system, and require transmission power control, such as with CDMA.

### Background Art

Recently, as demand for radio communications experiences rapid growth, attention has been focusing on multicarrier methods that make efficient use of a limited frequency band and are capable of transmitting a large volume of information at one time.

In multicarrier radio communications, in order to maintain constant reception quality for each channel, it has been conventional practice to set a target value for each channel and perform transmission power control so that reception quality becomes virtually equal to that target value.

However, since a large amount of transmission power is necessary in order to obtain the desired reception quality for a channel for which transmission path conditions are poor, the above-mentioned conventional transmission power control method incurs problems of a greater load on the transmitting side amplifier and increased interference with other cells.

### Disclosure of Invention

It is an object of the present invention to provide a radio communication apparatus and transmission power control method that enable a desired quality to be obtained for overall communications while reducing total transmission power on the transmitting side.

This object is achieved by noting the fact that a desired quality is obtained for overall communications even if transmission power is controlled so that transmission power of a channel with good transmission path conditions is slightly increased and transmission power of a channel with poor transmission path conditions is greatly decreased, and controlling the transmission power of each channel based on the relationship between overall channel quality after combining the signals of each channel and a target quality.

### Brief Description of Drawings

FIG.1 is a block diagram showing the configuration of a radio communication apparatus according to Embodiment 1 of the present invention;
FIG.2 is a block diagram showing the internal configuration of a TPC command generator according to Embodiment 1 of the present invention;
FIG.3 is a block diagram showing the configuration of a radio communication apparatus according to Embodiment 2 of the present invention;
FIG.4 is a block diagram showing the internal configuration of a fluctuation estimation section according to Embodiment 2 of the present invention;
FIG.5 is a block diagram showing the internal configuration of a TPC command generator according to Embodiment 2 of the present invention;
FIG.6 is a block diagram showing the configuration of a radio communication apparatus according to Embodiment 3 of the present invention;
FIG.7 is a block diagram showing the internal configuration of a fluctuation estimation section according to Embodiment 3 of the present invention;
FIG.8 is a block diagram showing the configuration of a radio communication apparatus according to Embodiment 4 of the present invention;
FIG.9 is a block diagram showing the configuration of a radio communication apparatus according to Embodiment 5 of the present invention;
FIG.10 is a block diagram showing the configuration of a radio communication apparatus according to Embodiment 6 of the present invention; and
FIG.11 is a block diagram showing the configuration of a radio communication apparatus according to Embodiment 7 of the present invention.

### Best Mode for Carrying out the Invention

When radio communications are performed using a plurality of channels, if transmission power control is performed individually to maintain a constant reception quality for each channel, transmission at high power is necessary in order to support a channel for which transmission path conditions are poor, as stated above. On the other hand, a desired quality is obtained for overall communications even if the transmission power of each channel is controlled so that transmission power of a channel with good transmission path conditions is slightly increased and transmission power of a channel with poor transmission path conditions is greatly decreased. The inventors noted this point in arriving at the present invention.

That is to say, the gist of the present invention is controlling the transmission power of each channel based on the relationship between overall channel quality after combining the signals of each channel and a target quality.

With reference now to the accompanying drawings, embodiments of the present invention will be explained in detail below. In the following embodiments, a case in described in which signals are transmitted on four channels, A through D.

### (Embodiment 1)

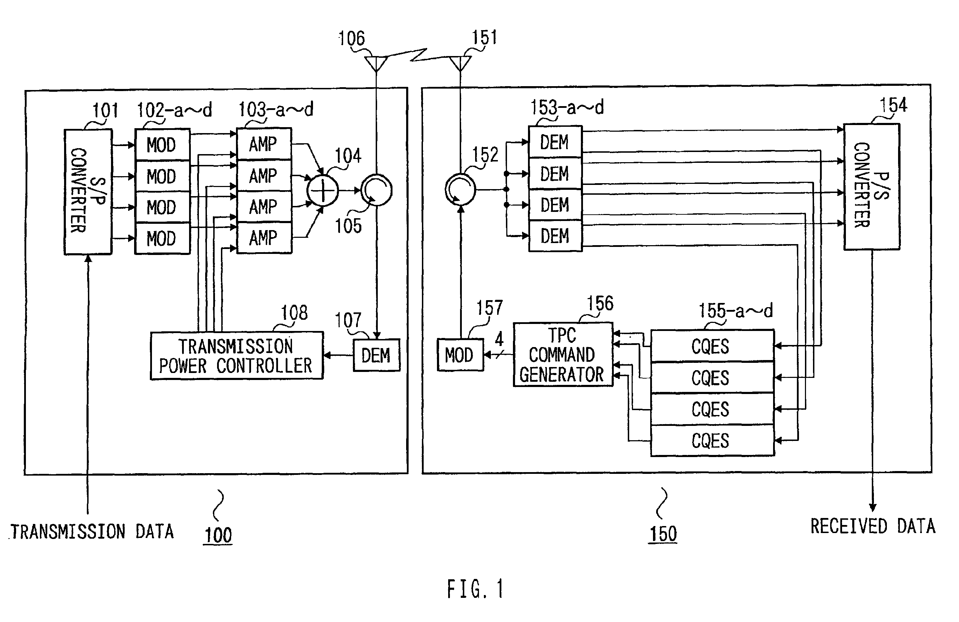

FIG.1 is a block diagram showing the configuration of a radio communication apparatus according to Embodiment 1 of the present invention.

First, the configuration of a radio communication apparatus (hereinafter referred to as transmitting apparatus") 100 on the side that performs transmission power control will be described. The transmitting apparatus 100 shown in FIG.1 mainly comprises an S/P (Serial-Parallel) converter 101, modulators (MOD) 102-a through 102-d, amplifiers (AMP) 103-a through 103-d, a multiplexer 104, a duplexer 105, an antenna 106, a demodulator (DEM) 107, and a transmission power controller 108.

The S/P converter 101 converts a single stream of transmit data to four signal streams, A through D.

Modulators 102-a through 102-d perform modulation processing on the signal of the corresponding stream output from the S/P converter 101. Amplifiers 103-a through 103-d amplify the corresponding output signals from modulators 102-a through 102-d based on control by the transmission power controller 108. The multiplexer 104 multiplexes the output signals of amplifiers 103-a through 103-d.

The duplexer 105 performs radio transmission from the antenna 106 of a signal output from the multiplexer 104, and outputs a signal received at the antenna 106 to the demodulator 107.

The demodulator 107 demodulates a received signal output from the duplexer 105. The transmission power controller 108 extracts a transmission power control command from a demodulated received signal, and controls amplifiers 103-a through 103-d based on the transmission power control command.

Next, the configuration of a radio communication apparatus (hereinafter referred to as feceiving apparatus ) 150 that is a communicating party of the transmitting apparatus 100 will be described. The receiving apparatus 150 shown in FIG.1 mainly comprises an antenna 151, a duplexer 152, demodulators (DEM) 153-a through 153-d, a P/S (Parallel-Serial) converter 154, channel quality estimation sections (CQES) 155-a through 155-d, a TPC (Transmission Power Control) command generator 156, and a modulator (MOD) 157.

The duplexer 152 outputs a signal received at the antenna 151 to demodulators 153-a through 153-d, and performs radio transmission from the antenna 151 of a signal output from the modulator 157.

Demodulators 153-a through 153-d modulate a received signal output from the duplexer 152. The P/S converter 154 converts signals of four streams output from demodulators 153-a through 153-d to a single stream signal, and extracts receive data.

Channel quality estimation sections 155-a through 155-d estimate the quality of channels A through D from the output signals of the corresponding demodulators 153-a through 153-d. Hereinafter, the channel quality estimated by channel quality estimation section 155-a is referred to as channel quality A. Similarly, the channel qualities estimated by channel quality estimation sections 155-b through 155d are referred to as channel qualities B through D.

The TPC command generator 156 generates a TPC command for each of channels A through D based on the relationship of overall channel quality combining channel qualities A through D to the target quality. The processing operations in the TPC command generator 156 will be described in detail later herein.

The modulator 157 modulates TPC commands generated by the TPC command generator 156, and outputs the resulting signal to the duplexer 152.

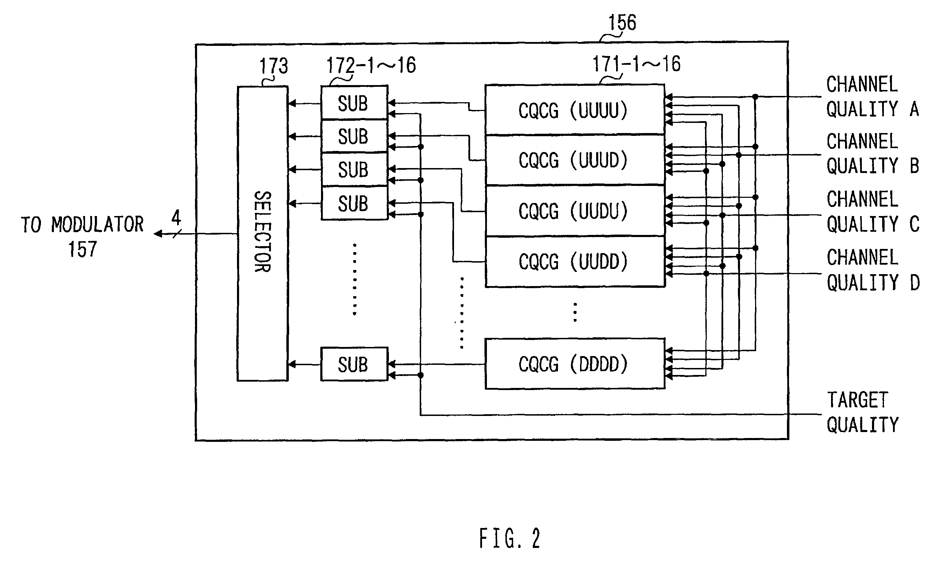

Next, the processing operations in the TPC command generator 156 will be described in detail using FIG.2. FIG.2 is a block diagram showing the internal configuration of the TPC command generator 156 according to this embodiment.

The TPC command generator 156 shown in FIG.2 mainly comprises channel quality candidate generators (CQCG) 171-1 through 171-16, subtracters.172-1 through 172-16, and a selector 173.

Channel quality candidate generators 171-1 through 171-16 each have as input channel qualities A through D, virtually increase (U) or decrease (D) the transmission power of channels A through D using mutually different patterns, and predict overall channel quality after combining each channel signal in that case. If there are four channels, patterns for increasing or decreasing each channel are of 2⁴ = 16 kinds.

For example, channel quality candidate generator 171-1 predicts overall channel quality when transmission is performed with transmission power increased for all of channels A through D, and channel quality candidate generator 171-2 predicts overall channel quality when transmission is performed with transmission power increased for channels A through C and decreased for channel D.

Each of subtracters 172-1 through 172-16 finds the difference between the channel quality predicted by corresponding channel quality candidate generator 171-1 through 171-16 and the target quality, and outputs a difference value.

The selector 173 selects the difference value with the smallest absolute value from among the difference values output from subtracters 172-1 through 172-16, and generates a TPC command for each of channels A through D based on the transmission power of channels A through D virtually increased or decreased by corresponding channel quality candidate generator 171-1 through 171-16.

For example, if, among the absolute values of difference values, that output from subtracter 172-3 is the smallest, the channel quality predicted by corresponding channel quality candidate generator 171-3 is, according to FIG.2, for the case where transmission is performed with transmission power increased for channels A, B, and D, and transmission is performed with transmission power decreased for channel C. Therefore, the selector 173 generates TPC commands instructing the transmitting apparatus 100 to transmit with the transmission power of channels A, B, and D increased, and to transmit with the transmission power of channel C decreased.

By thus controlling the transmission power of each channel based on the relationship between overall channel quality after combining the signals of each channel and a target quality, it is possible for a desired quality to be obtained for overall communications while reducing total transmission power on the transmitting side. By this means, it is possible to alleviate the load on the transmitting side, such as on the transmitter, and to suppress interference with other cells.

To be more specific, it is possible to expect efficient transmission power control by predicting overall channel quality when each channel is virtually increased or decreased for all patterns, selecting the pattern with the smallest difference value compared with a target quality, and generating TPC commands accordingly.

### (Embodiment 2)

In Embodiment 1, a channel for which transmission path conditions are poor and transmission power is decreased does not have any effect on combining in the TPC command generator 156, and therefore, even if the transmission path conditions of that channel change for the better, transmission power remains low, and there is a risk of that channel becoming unusable.

In Embodiment 2, a case is described where channel fluctuations are taken into consideration in generating TPC commands in order to solve the above-described problem.

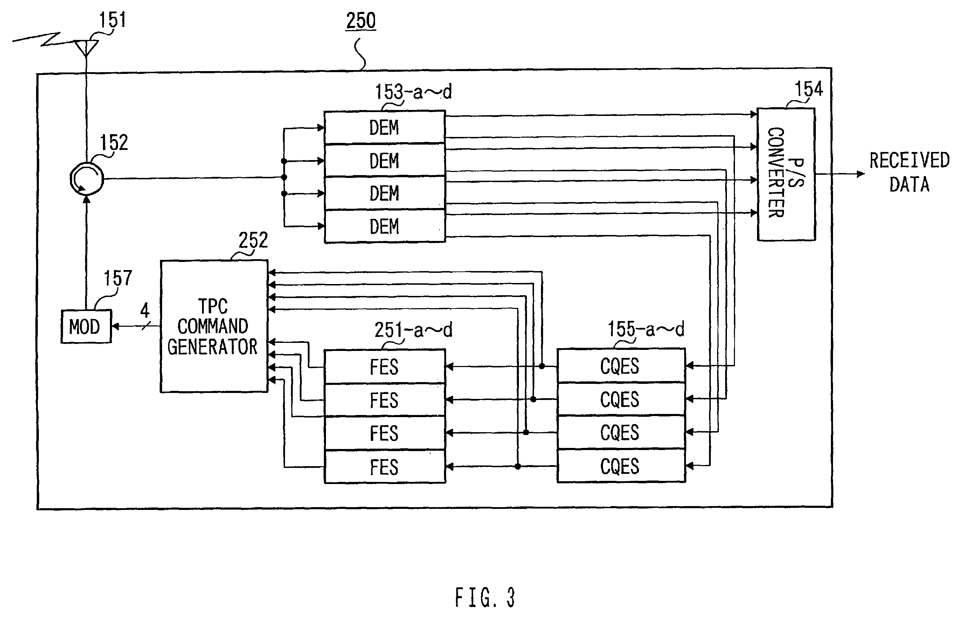

FIG.3 is a block diagram showing the configuration of a radio communication apparatus according to Embodiment 2 of the present invention. Parts in the radio communication apparatus shown in FIG.3 identical to those in the radio communication apparatus shown in FIG.1 are assigned the same codes as in FIG.1 and their detailed explanations are omitted. Also, the transmitting apparatus according to this embodiment is identical to the transmitting apparatus 100 shown in FIG.1, and it is therefore omitted in FIG.3.

Compared with the receiving apparatus 150 shown in FIG.1, the receiving apparatus 250 shown in FIG.3 additionally comprises fluctuation estimation sections (FES) 251-a through 251-d. Also, in the receiving apparatus 250 shown in FIG.3, the operation of the TPC command generator 252 differs from that of the TPC command generator 156 of the receiving apparatus 150 shown in FIG.1.

Channel quality estimation sections 155-a through 155-d estimate the quality of channels A through D from the output signals of the corresponding demodulators 153-a through 153-d, and output the estimation results to fluctuation estimation sections 251-a through 251-d.

Fluctuation estimation sections 251-a through 251-d estimate the amount of fluctuation of each of channel qualities A through D. Hereinafter, the amount of fluctuation in channel quality A estimated by fluctuation estimation section 251-a is referred to as fluctuation amount A. Similarly, the amounts of fluctuation in channel qualities B through D estimated by fluctuation estimation sections 251-b through 251-d are referred to as fluctuation amounts B through D. The processing operations in fluctuation estimation sections 251-a through 251-d will be described in detail later herein.

The TPC command generator 252 generates a TPC command for each of channels A through D based on the relationship of overall channel quality combining channel qualities A through D to the target quality, after considering fluctuation amounts A through D. The processing operations in the TPC command generator 252 will be described in detail later herein.

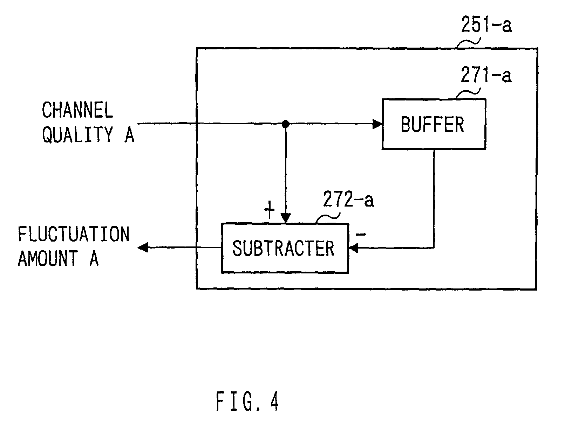

Next, processing operations in fluctuation estimation sections 251-a through 251-d will be described in detail using FIG.4. FIG.4 is a block diagram showing the internal configuration of fluctuation estimation section 251-a according to this embodiment.

Fluctuation estimation section 251-a mainly comprises a buffer 271-a and a subtracter 272-a. Fluctuation estimation sections 251-b through 251-d have a similar internal configuration to fluctuation estimation section 251-a.

Buffer 271-a temporarily holds channel quality A output from channel quality estimation section 155-a.

Subtracter 272-a subtracts the previous channel quality A held in buffer 271-a from the current channel quality A output from channel quality estimation section 155-a. The result of subtraction by subtracter 272-a is fluctuation amount A. If fluctuation is in the direction of channel quality improvement, the sign of that channel quality fluctuation amount is positive.

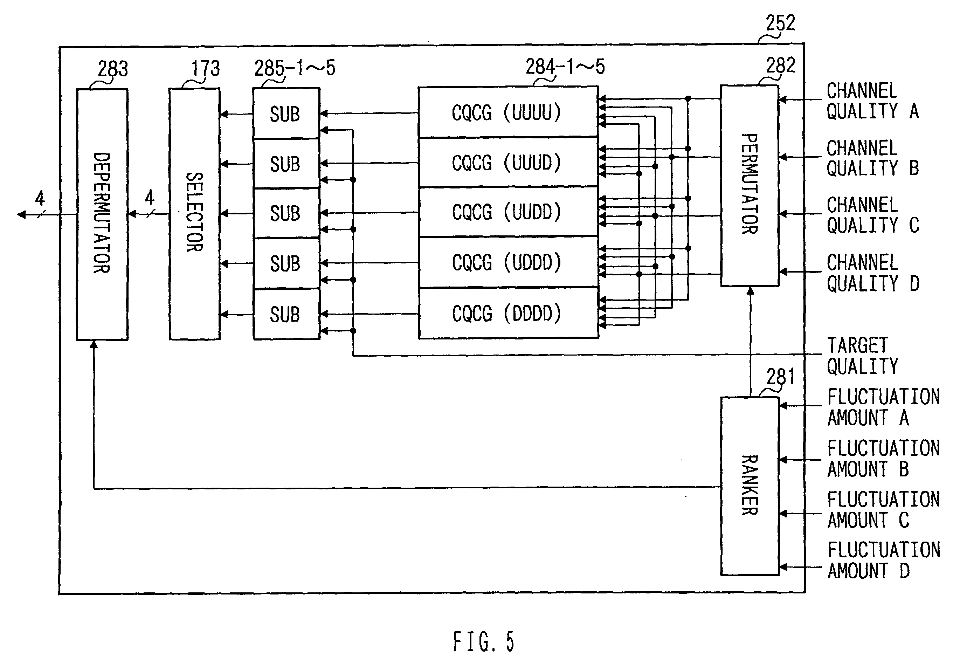

Next, processing operations in the TPC command generator 252 will be described in detail using FIG.5. FIG.5 is a block diagram showing the internal configuration of the TPC command generator 252 according to this embodiment. Parts in the TPC command generator 252 shown in FIG.5 identical to those in the TPC command generator 156 shown in FIG.2 are assigned the same codes as in FIG.2 and their detailed explanations are omitted.

Compared with the TPC command generator 156 shown in FIG.2, the TPC command generator 252 shown in FIG.5 additionally comprises a ranker 281, a permutator 282, and a depermutator 283. Also, the configuration includes channel quality candidate generators (CQCG) 284-1 through 284-5 and subtracters (SUB) 285-1 through 285-5 instead of channel quality candidate generators 171-1 through 171-16 and subtracters 172-1 through 172-16.

The ranker 281 has as input channel quality fluctuation amounts A through D estimated by fluctuation estimation sections 251-a through 251-d, performs ranking in order of size of channel quality fluctuation amount for the channels, and outputs the ranking results to the permutator 282 and depermutator 283.

Based on the ranking results from the ranker 281, the permutator 282 rearranges channel qualities A through D and outputs the results to quality candidate generators 284-1 through 284-5.

According to the ranking results from the ranker 281, quality candidate generators 284-1 through 284-5 combine virtually increased or decreased transmission power levels of channels A through D, and predict overall channel quality. At this time, quality candidate generators 284-1 through 284-5 do not perform overall channel quality prediction for patterns whereby transmission power is increased for a channel with a lower ranking than a channel whose transmission power is decreased.

For example, quality candidate generator 284-1 predicts overall channel quality when transmission is performed with transmission power increased for each channel, and channel quality candidate generator 284-2 predicts overall channel quality when transmission is performed with transmission power increased for the top three channels in terms of size of channel quality fluctuation amount among the channels, and transmission is performed with transmission power decreased for the channel with the smallest channel quality fluctuation amount. Similarly, channel quality candidate generator 284-i (where i is an integer from 1 to 5) predicts overall channel quality when transmission is performed with transmission power increased for the top (5-i) channels in terms of size of channel quality fluctuation amount among the channels, and transmission is performed with transmission power decreased for the bottom (i-1) channels with the smallest channel quality fluctuation amounts.

Each of subtracters 285-1 through 285-5 finds the difference between the channel quality predicted by corresponding quality candidate generator 284-1 through 284-5 and the target quality, and outputs a difference value.

The selector 173 selects the difference value with the smallest absolute value from among the difference values output from subtracters 285-1 through 285-5, and generates a TPC command for each of channels A through D based on the transmission power of channels A through D virtually increased or decreased by corresponding quality candidate generators 284-1 through 284-5.

Based on the ranking results from the ranker 281, the depermutator 283 rearranges TPC commands output in order of size of channel quality fluctuation amount from the selector 173 in channel A through D order.

Therefore, as regards the channel quality with the largest fluctuation amount, unless quality candidate generator 284-5 is selected, a TPC command directing a transmission power increase is generated, and transmission power can be increased with the highest priority.

By considering channel fluctuations when generating TPC commands in this way, when transmission conditions subsequently change for the better for a channel whose transmission path conditions are poor and whose transmission power has been decreased, that channel can be used in channel quality combining.

Also, the better the channel conditions, the greater is the improvement in quality that can be expected with a small increase in transmission power, and the more efficient the transmission power control that can be expected. Moreover, the number of channel quality candidate generators and subtracters can be reduced, and the amount of computation can be decreased.

### (Embodiment 3)

The channel quality fluctuation amounts estimated by fluctuation estimation sections 251-a through 251-d in above-described Embodiment 2 include a forced fluctuation portion due to transmission power control. Consequently, error remains with respect to the pure channel quality fluctuation amounts.

In Embodiment 3, a case is described where a forced fluctuation portion due to transmission power control is eliminated when estimating a channel quality fluctuation amount in order to solve the above-described problem.

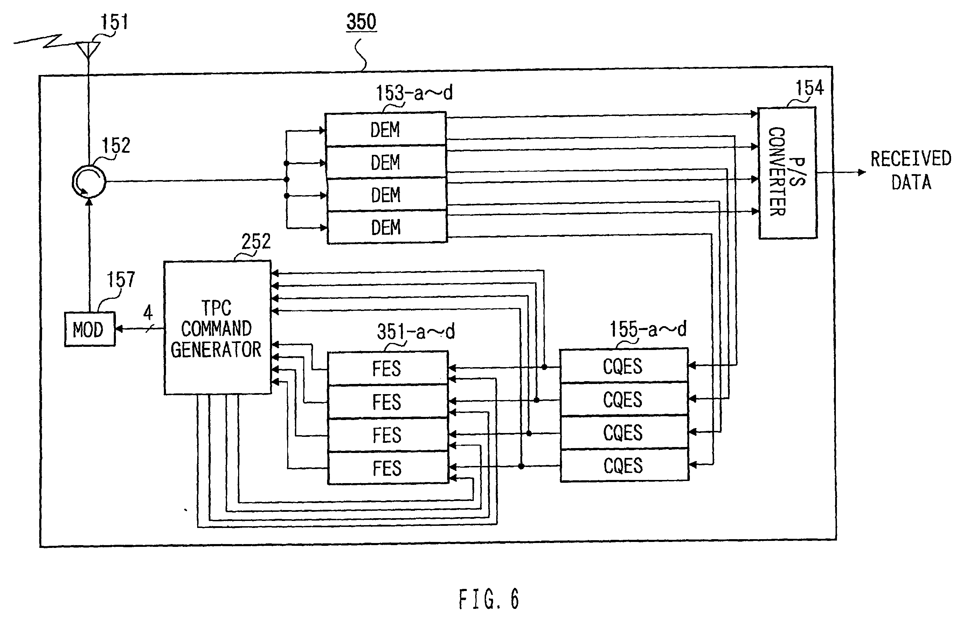

FIG.6 is a block diagram showing the configuration of a radio communication apparatus according to Embodiment 3 of the present invention. Parts in the radio communication apparatus shown in FIG.6 identical to those in the radio communication apparatus shown in FIG.3 are assigned the same codes as in FIG.3 and their detailed explanations are omitted. Also, the transmitting apparatus according to this embodiment is identical to the transmitting apparatus 100 shown in FIG.1, and it is therefore omitted in FIG.6.

In the receiving apparatus 350 shown in FIG.6, the operation of fluctuation estimation sections (FES) 351-a through 351-d differs from that of fluctuation estimation sections 251-a through 251-d of the receiving apparatus 250 shown in FIG.3.

Using TPC commands generated by the TPC command generator 252, fluctuation estimation sections 351-a through 351-d eliminate a forced fluctuation portion due to transmission power control when estimating the fluctuation amounts of channel qualities A through D.

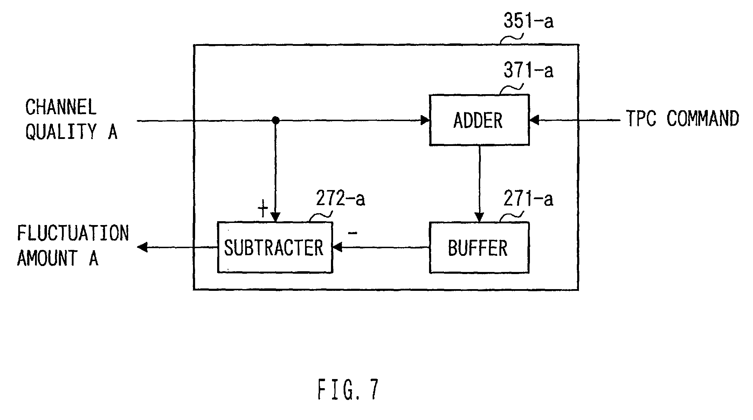

FIG.7 is a block diagram showing the internal configuration of fluctuation estimation section 351-a according to this embodiment. Parts in fluctuation estimation section 351-a shown in FIG.7 identical to those in fluctuation estimation section 251-a shown in FIG.4 are assigned the same codes as in FIG.4 and their detailed explanations are omitted.

Compared with fluctuation estimation section 251-a shown in FIG.4, fluctuation estimation section 351-a shown in FIG.7 additionally comprises an adder 371-a. Fluctuation estimation sections 351-b through 351-d have a similar internal configuration to fluctuation estimation section 351-a.

Adder 371-a has channel quality A and a TPC command as its input, and eliminates a forced fluctuation portion due to transmission power control from channel quality A based on a transmission power increase/decrease value indicated by the TPC command. For example, if the TPC command indicates a 1 dB transmission power increase, and channel quality A is 20 dB, since 1 dB of that is attributable to the transmission power having been increased, adder 371-a outputs a value resulting from subtracting 1 dB from 20 dB.

Buffer 271-a temporarily holds channel quality A from which the forced fluctuation portion due to transmission power control has been eliminated by adder 371-a.

Subtracter 272-a subtracts the previous channel quality A held in buffer 271-a from the current channel quality A output from channel quality estimation section 155-a. The result of subtraction by subtracter 272-a is the fluctuation amount of channel quality A from which the forced fluctuation portion due to transmission power control has been eliminated.

By eliminating a forced fluctuation portion due to transmission power control from a channel quality fluctuation amount in this way, it is possible to perform accurate transmission power control using pure channel quality fluctuation amounts.

In above-described Embodiments 2 and 3, a case has been described where channel quality fluctuation amounts are estimated, but the present invention can also obtain the same kind of effect by estimating reception power fluctuation amounts.

### (Embodiment 4)

In Embodiment 4, a case is described where the transmission power control method of the present invention is applied to CDMA radio communications.

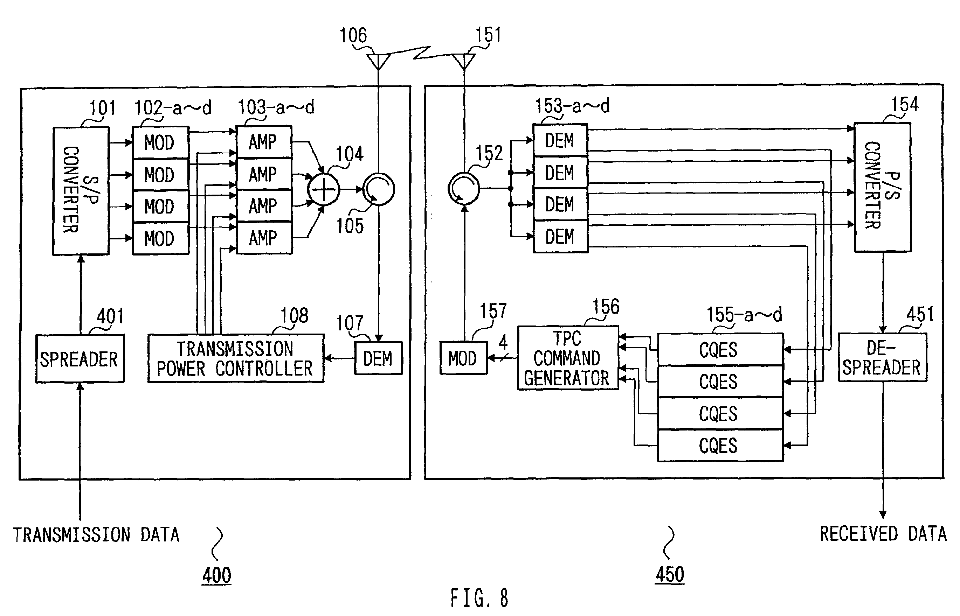

FIG.8 is a block diagram showing the configuration of a radio communication apparatus according to Embodiment 4 of the present invention. Parts in the radio communication apparatus shown in FIG.8 identical to those in the radio communication apparatus shown in FIG.1 are assigned the same codes as in FIG.1 and their detailed explanations are omitted.

Compared with the transmitting apparatus 100 shown in FIG.1, the transmitting apparatus 400 shown in FIG.8 additionally comprises a spreader 401.

The spreader 401 performs spreading processing on transmit data. The S/P converter 101 converts a single spread signal stream output from the spreader 401 to four signal streams, A through D.

Compared with the receiving apparatus 150 shown in FIG.1, the receiving apparatus 450 shown in FIG.8 additionally comprises a despreader 451.

The despreader 451 performs despreading processing on an output signal from the P/S converter 154 and extracts receive data.

The S/P converter 101 can convert a spread signal to a plurality of signal streams in spread chip units. By this means, the quality of all transmit data can be kept virtually constant even if quality differs greatly for each channel, and a desired quality can be obtained for overall communications while reducing total transmission power on the transmitting side.

This embodiment can be combined as appropriate with above-described Embodiment 2 or 3.

### (Embodiment 5)

In Embodiment 5, a case is described where the transmission power control method of the present invention is applied to radio communications in which error correcting coding processing is carried out.

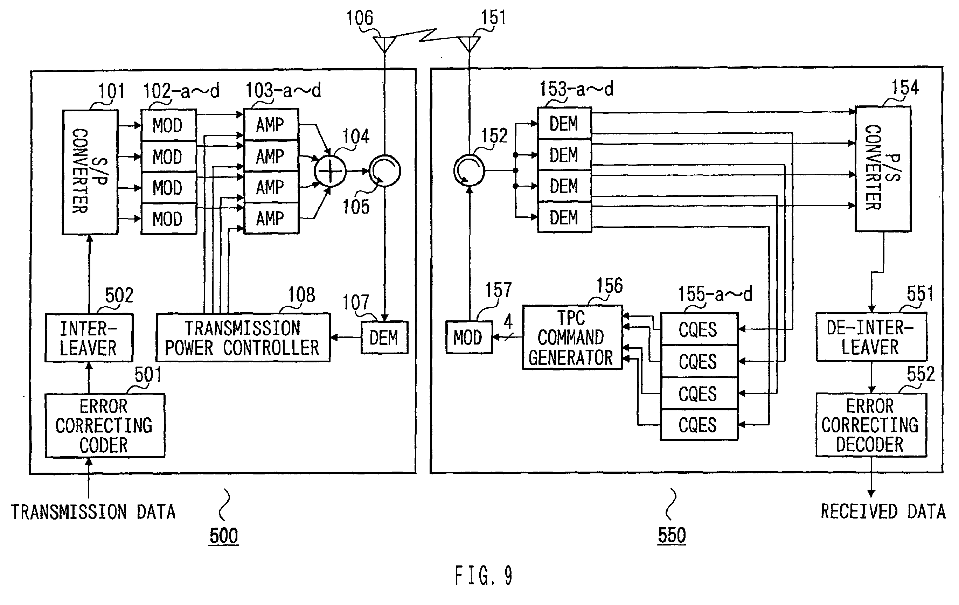

FIG.9 is a block diagram showing the configuration of a radio communication apparatus according to Embodiment 5 of the present invention. Parts in the radio communication apparatus shown in FIG.9 identical to those in the radio communication apparatus shown in FIG.1 are assigned the same codes as in FIG.1 and their detailed explanations are omitted.

Compared with the transmitting apparatus 100 shown in FIG.1, the transmitting apparatus 500 shown in FIG.9 additionally comprises an error correcting coder 501 and an interleaver 502.

The error correcting coder 501 performs error correcting coding processing on transmit data. The interleaver 502 performs interleaving processing on an output signal from the error correcting coder 501. The S/P converter 101 converts a single signal stream output from the interleaver 502 to four signal streams, A through D.

Compared with the receiving apparatus 150 shown in FIG.1, the receiving apparatus 550 shown in FIG.9 additionally comprises a de-interleaver 551 and an error correcting decoder 552.

The de-interleaver 551 performs processing (de-interleaving) on an output signal from the P/S converter 154 to restore the interleaved signal order produced by the interleaver 502 to its original state. The error correcting decoder 552 performs error correcting decoding processing on an output signal from the de-interleaver 551, and extracts receive data.

By thus applying the transmission power control method of the present invention to radio communications in which error correcting coding processing is carried out, burst errors are unlikely to occur and correction capability can be improved. Therefore, the quality of all transmit data can be kept virtually constant even if quality differs greatly for each channel, and a desired quality can be obtained for overall communications while reducing total transmission power on the transmitting side.

This embodiment can be combined as appropriate with above-described Embodiment 2 or 3 and Embodiment 4.

### (Embodiment 6)

In Embodiment 6, a case is described where multicarrier operation is implemented by means of OFDM.

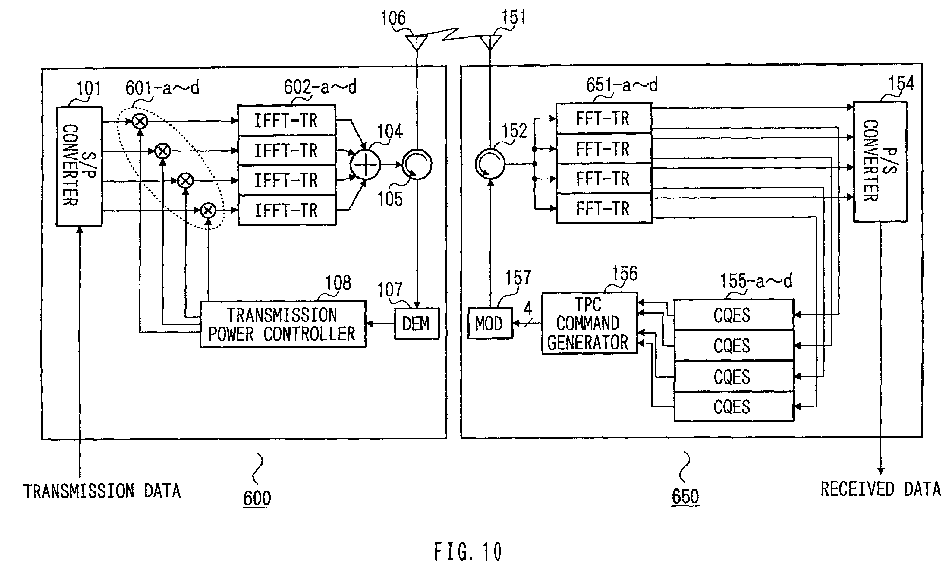

FIG.10 is a block diagram showing the configuration of a radio communication apparatus according to Embodiment 6 of the present invention . Parts in the radio communication apparatus shown in FIG.10 identical to those in the radio communication apparatus shown in FIG.1 are assigned the same codes as in FIG.1 and their detailed explanations are omitted.

Compared with the transmitting apparatus 100 shown in FIG.1, the transmitting apparatus 600 shown in FIG.10 comprises amplifiers 601-a through 601-d and IFFT (inverse Fourier) transformers 602-a through 602d instead of modulators 102-a through 102-d and amplifiers 103-a through 103-d.

Amplifiers 601-a through 601-d amplify the corresponding stream signals output from the S/P converter 101 based on control by the transmission power controller 108. IFFT transformers 602-a through 602d perform an inverse Fourier transform on output signals from corresponding amplifiers 601-a through 601-d.

Compared with the receiving apparatus 150 shown in FIG.1, the receiving apparatus 650 shown in FIG.10 comprises FFT (Fourier) transformers 651-a through 651-d instead of demodulators 153-a through 153-d.

FFT transformers 651-a through 651-d perform a Fourier transform on a received signal output from the duplexer 152. The P/S converter 154 converts signals of four streams output from FFT transformers 651-a through 651-d to a single stream signal, and extracts receive data.

By implementing multicarrier operation by means of OFDM in this way, spectral efficiency can be improved.

This embodiment can be combined as appropriate with above-described Embodiment 2 or 3 and Embodiments 4 and 5.

### (Embodiment 7)

In Embodiment 7, a case is described where the transmission power control method of the present invention is applied to radio communications in which the same transmit data is placed on a plurality of channels.

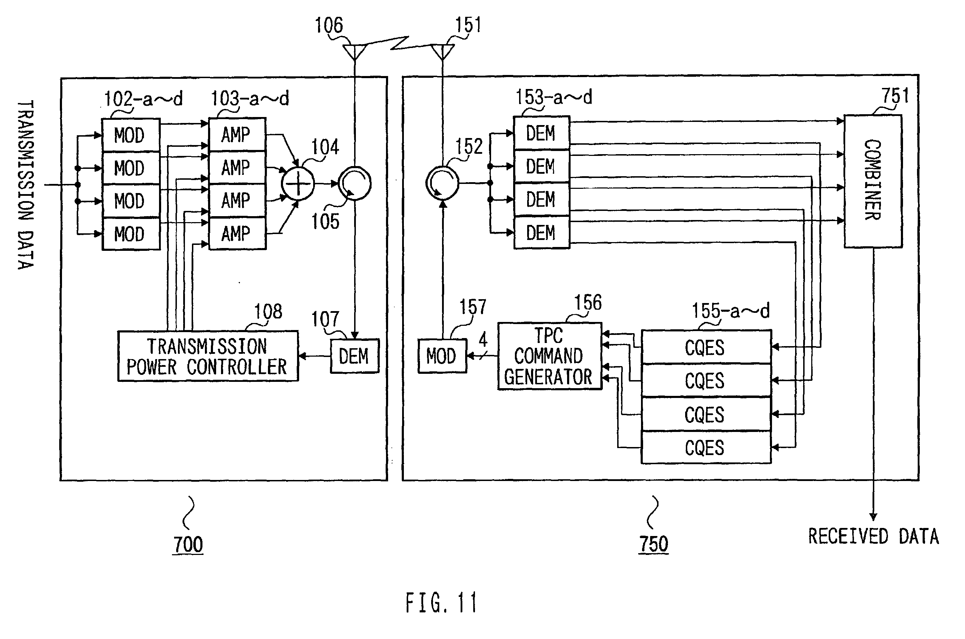

FIG.11 is a block diagram showing the configuration of a radio communication apparatus according to Embodiment 7 of the present invention. Parts in the radio communication apparatus shown in FIG.11 identical to those in the radio communication apparatus shown in FIG.1 are assigned the same codes as in FIG.1 and their detailed explanations are omitted.

Compared with the transmitting apparatus 100 shown in FIG.1, the transmitting apparatus 700 shown in FIG.11 is configured without an S/P converter 101.

Modulators 102-a through 102-d perform modulation processing on branched transmit data.

Compared with the receiving apparatus 150 shown in FIG.1, the receiving apparatus 750 shown in FIG.11 additionally comprises a combiner 751.

The combiner 751 combines output signals from the P/S converter 154 and extracts receive data.

In this way, the transmission power control method of the present invention can be applied to radio communications in which the same transmit data is placed on a plurality of channels.

This embodiment can be combined as appropriate with above-described Embodiment 2 or 3 and Embodiments 4, 5, and 6.

In the above-described embodiments, a case is described where a plurality of channels is implemented by means of multicarrier operation, but the present invention is not limited to this, and the same kind of effects can be obtained by implementing a plurality of channels using another method.

For example, a plurality of channels can also be implemented by separating the times of transmit signals on the channels. When the same area is repeatedly circuited, the same effect as multicarrier operation is obtained by implementing the same channel every rotation period.

Also, a plurality of channels can be implemented by transmitting the transmit signal of each channel from a different antenna. In this case, however, the signals on all channels are mixed together on the receiving side, and processing to identify the signals is necessary, such as multiplying the transmit signal of each channel by a different spreading code.

Moreover, a plurality of channels can be implemented by transmitting the transmit signal of each channel with a different directivity. In this case, use is made of the fact that directions of arrival are different, and a signal can be identified according to its direction using a directional antenna on the receiving side.

Furthermore, a plurality of channels can be implemented by means of polarization. As polarized waves are mutually orthogonal, they can be used as different channels.

As is clear from the above descriptions, according to a radio communication apparatus and transmission power control method of the present invention, the transmission power of each channel can be controlled based on the relationship between overall channel quality after combining the signals of each channel and a target quality, making it possible for a desired quality to be obtained for overall communications while reducing total transmission power on the transmitting side. By this means, it is possible to alleviate the load on the transmitting side, such as on the transmitter, and to suppress interference with other cells.

This application is based on Japanese Patent Application No.2000-098516 filed on March 31, 2000, entire content of which is expressly incorporated by reference herein.

### Industrial Applicability

The present invention is suitable for use in a communication terminal apparatus and base station apparatus that use a plurality of channels, such as a multicarrier system, and require transmission power control, such as with CDMA.

## Claims

1. A radio communication apparatus comprising:
receiving means for receiving a signal transmitted on a plurality of channels from a communicating party;
channel quality estimating means for estimating channel quality of a received signal for each channel;
transmission power control command generating means for generating a transmission power control command for each channel based on a relationship between overall channel quality after combining signals of each channel and a target quality; and
transmitting means for performing radio transmission of said transmission power control command to said communicating party.

2. The radio communication apparatus according to claim 1, wherein said transmission power control command generating means comprises:
channel quality candidate generating means for combining signals of each channel when transmission power of each channel has been transmitted after being virtually increased or decreased, and predicting overall channel quality after combining; and
selecting means for selecting, from among channel qualities predicted by this channel quality candidate generating means, one for which the absolute value of difference from a target quality is smallest, and generating a transmission power control command to each channel based on a selection result.

3. The radio communication apparatus according to claim 1, further comprising fluctuation amount estimating means for estimating a fluctuation amount of each channel quality;
wherein said transmission power control command generating means generates a transmission power control command for each channel after considering the fluctuation amount of each channel quality.

4. The radio communication apparatus according to claim 3, wherein said fluctuation amount estimating means temporarily holds each channel quality estimated by said channel quality estimating means, subtracts a previous channel quality from a current channel quality, and estimates a fluctuation amount of each channel quality.

5. The radio communication apparatus according to claim 4, wherein said fluctuation amount estimating means eliminates a forced fluctuation portion due to transmission power control from the fluctuation amount of each channel quality.

6. The radio communication apparatus according to claim 5, wherein said fluctuation amount estimating means subtracts a transmission power increase/decrease value indicated by a transmission power control command from a previous channel quality.

7. The radio communication apparatus according to claim 3, wherein:
said transmission power control command generating means comprises ranking means for performing ranking for each channel in order of size of channel quality fluctuation amount; and
said channel quality candidate generating means does not perform overall channel quality prediction for a pattern whereby transmission power is increased for a channel with a lower ranking than a channel whose transmission power is decreased.

8. The radio communication apparatus according to claim 1, wherein said receiving means receives a signal distributed to a plurality of channels in spread chip units by a communicating party and performs despreading processing, and extracts receive data.

9. The radio communication apparatus according to claim 1, wherein said receiving means receives a signal subjected to error correcting coding processing and distributed to a plurality of channels by a communicating party and performs error correcting decoding processing, and extracts receive data.

10. The radio communication apparatus according to claim 1, wherein said receiving means receives and combines signals for which identical data has been distributed to a plurality of channels by a communicating party, and extracts receive data.

11. A radio communication apparatus that transmits a signal using a plurality of channels to the radio communication apparatus according to claim 1.

12. A radio communication apparatus that transmits a signal distributed to a plurality of channels in spread chip units to the radio communication apparatus according to claim 8.

13. A radio communication apparatus that performs error correcting coding processing on transmit data and transmits said transmit data using a plurality of channels to the radio communication apparatus according to claim 9.

14. A radio communication apparatus that transmits identical data distributed a plurality of channels to the radio communication apparatus according to claim 10.

15. A transmission power control method comprising the steps of:
on the transmitting side, transmitting a signal on a plurality of channels; and
on the receiving side:
selecting a value for which the absolute value of a difference between overall channel quality after combining signals of each channel and a target quality is smallest;
generating a transmission power control command for each channel based on a selection result; and
performing radio transmission of said transmission power control command to said transmitting side.

16. The transmission power control method according to claim 15, wherein a plurality of channels is implemented by means of multicarrier operation.

17. The transmission power control method according to claim 16, wherein multicarrier operation is implemented by means of OFDM.

18. The transmission power control method according to claim 15, wherein said transmitting side transmits with times of transmit signals of each channel separated.

19. The transmission power control method according to claim 15, wherein said transmitting side transmits a transmit signal of each channel from a different antenna.

20. The transmission power control method according to claim 15, wherein said transmitting side transmits a transmit signal of each channel with a different directivity.

21. The transmission power control method according to claim 15, wherein said transmitting side implements a plurality of channels by means of polarization.
